# EUROPÄISCHE PATENTSCHRIFT

(11) **EP 2 543 978 B1**
(45) Veröffentlichungstag und Bekanntmachung des Hinweises auf die Patenterteilung: **14.05.2014**
(21) Anmeldenummer: 12171763.1
(22) Anmeldetag: 13.06.2012
(51) Int. Cl.: G01L 1/16, G01L 5/24

(54) **Vorrichtung zur Kraftmessung an einem Messkörper**
Device for measuring force exerted on a measuring body
Dispositif de mesure de forces dans un corps de mesure

(30) Priorität: 02.07.2011 DE 102011106392
(43) Veröffentlichungstag der Anmeldung: 09.01.2013
(73) Patentinhaber: Ott-Jakob Spanntechnik GmbH, 87663 Lengenwang (DE); SAW COMPONENTS Dresden GmbH, 01099 Dresden (DE)
(72) Erfinder: Bonerz, Stefan, 87616 Marktoberdorf (DE); Bechteler, Wolfgang, 87640 Ebenhofen (DE); Greif, Josef, 87654 Friesenried (DE); Wittek, Heiko, 01109 Dresden (DE); Zietzschmann, Steffen, 01561 Priestewitz (DE)
(74) Vertreter: Charrier, Rapp & Liebau

(56) Entgegenhaltungen:
- DE-A1- 10 138 261
- US-A- 4 359 658
- US-B1- 6 279 395

## Beschreibung

Die Erfindung betrifft eine Vorrichtung zur Kraftmessung an einem Messkörper mittels eines Oberflächenwellensensors.

Oberflächenwellensensoren, nach der Abkürzung von Surface Acoustic Wave auch SAW-Sensoren genannt, sind als solche bekannt. Sie bestehen im wesentlichen aus einem piezoelektrischen Substrat und an dessen Oberfläche angeordneten Interdigitalelektroden, durch welche bei Einspeisung eines elektrischen Signals akustische Oberflächenwellen in dem Substrat angeregt bzw. reflektiert werden können. Umgebungseinflüsse wie eine Temperaturänderung oder eine Verformung des Substrates infolge einer Kraftbeaufschlagung verändern die Wellenausbreitungseigenschaften. Eine an einer Elektrodenanordnung in dem Substrat angeregte und an einer anderen Elektrodenanordnung reflektierte Welle wird dadurch in charakteristischer Weise verändert, so dass aus dem eingespeisten und dem reflektierten Signal ein Maß für eine zu erfassende Messgröße abgeleitet werden kann. Ein Beispiel für einen Oberflächenwellensensor zur Messung mechanischer Größen wie Kraft, Beschleunigung und Drehmoment bietet die GB 2 451 861 A.

Bei der Messung einer auf einen Körper einwirkenden Kraft anhand der dadurch verursachten Verformung des Körpers ist eine feste Kopplung des Sensors mit dem Körper erwünscht, um die Verformung des Körpers auf den Sensor zu übertragen. Eine aus dem Bereich der Widerstands-Dehnungsmessstreifen bekannte Lösung besteht darin, den Sensor auf die Oberfläche des Körpers aufzukleben. Solche Klebeverbindungen sind allerdings problematisch im Hinblick auf Langzeitstabilität und Kriecheffekte. Darüber hinaus sind die piezoelektrischen Substrate von Oberflächenwellensensoren im Vergleich zu Widerstands-Dehnungsmessstreifen üblicherweise dicker und weniger elastisch, was bei einer Klebung des Sensorsubstrates auf die Oberfläche des Körpers die Übertragung von dessen Verformung auf diejenige Oberfläche des Sensors, an welcher sich die Oberflächenwellen ausbreiten, beeinträchtigt.

Darüber hinaus ist die Empfindlichkeit eines Oberflächenwellensensors bei einer Klebeverbindung mit einem durch die zu messende Krafteinwirkung verformten Körper nicht konstant, sondern sie nimmt ausgehend von einem geringen Anfangswert mit zunehmender Dehnung des Körpers zu. Bei einer kleinen Verformung des Messkörpers ausgehend vom entspannten Zustand wird somit für die Messung nur der Bereich geringster Empfindlichkeit genutzt.

Aus der DE 100 54 198 A1 ist eine Vorrichtung zur Drehmomentmessung mittels eines Oberflächenwellensensors mit drei in einer Ebene liegenden Empfindlichkeitsachsen bekannt. Der Oberflächenwellensensor ist bei dieser Vorrichtung unter Beaufschlagung mit einer Vorspannung an dem Messkörper, an welchem ein Drehmoment gemessen werden soll, befestigt. Die Vorspannung wird durch eine Verschraubung eines Trägers, auf dem das Sensorsubstrat durch Kleben befestigt ist, mit dem Messkörper erzeugt. Diese Vorrichtung ist daher mit den vorausgehend genannten Nachteilen einer Klebeverbindung zur Montage eines Oberflächenwellensensors behaftet.

Eine weitere Vorrichtung zur Kraftmessung mit einem piezoelektrischen Element ist in Dokument US 6 279 395 offenbart.

Der Erfindung liegt daher die Aufgabe zugrunde, für die Kraftmessung an einem Körper mittels eines Oberflächenwellensensors eine neue Lösung aufzuzeigen, welche die Nachteile einer Klebeverbindung überwindet.

Diese Aufgabe wird erfindungsgemäß durch eine Messvorrichtung mit den Merkmalen des Anspruchs 1 gelöst. Vorteilhafte Ausgestaltungen der Erfindung sind in den Unteransprüchen angegeben.

Erfindungsgemäß ist bei einer gattungsgemäßen Vorrichtung zur Kraftmessung an einem Messkörper mittels eines Oberflächenwellensensors das Substrat des Oberflächenwellensensors durch eine Vorspannvorrichtung eingeklemmt und dadurch mit einer einachsigen Vorspannkraft in der Hauptausbreitungsrichtung der Oberflächenwellen beaufschlagt und die Vorspannvorrichtung ist an oder in dem Messkörper in einer solchen Ausrichtung befestigt, dass die zu messende Kraft über die Vorspannvorrichtung richtungsgleich mit der Vorspannkraft auf das Substrat übertragen wird.

Hierdurch wird die Einleitung der zu messenden Kraft in den Sensor erheblich verbessert. Durch die Vorspannkraft besteht keinerlei Spiel bei der Kraftübertragung von dem Messkörper auf das Sensorsubstrat und durch die vorgesehene Ausrichtung der Vorspannvorrichtung bei der Befestigung an oder in dem Messkörper ergibt sich die resultierende Kraft, die auf das Sensorsubstrat wirkt, einfach als Differenz aus der Vorspannkraft und der zu messenden Kraft. Die Nachteile einer Kopplung des Sensorsubstrates mit dem Messkörper durch Klebung werden vollständig eliminiert. Darüber hinaus wird der Arbeitspunkt des Oberflächenwellensensors auf dessen Kennlinie durch die Vorspannung in einen Bereich höherer Empfindlichkeit verschoben und somit die Messgenauigkeit deutlich gesteigert. Hierbei kann vorteilhafterweise über das Ausmaß der Vorspannung die Empfindlichkeit gezielt auf einen gewünschten Wert eingestellt werden.

Bei einer ersten Ausführungsform sind das Substrat des Oberflächenwellensensors und die Vorspannvorrichtung zumindest teilweise in einem an der Oberfläche des Messkörpers ausgebildeten Hohlraum angeordnet und eine der Vorspannkraft entsprechende Reaktionskraft wird durch mindestens eine Oberfläche des Hohlraumes, welche durch die zu messende Kraft eine Verschiebung in deren Richtung erfährt, von der Vorspannvorrichtung auf den Messkörper übertragen. Bei einer Beaufschlagung des Messkörpers mit einer zu messenden Kraft verschieben sich senkrecht oder schräg zur Kraftrichtung liegende Oberflächen des Hohlraumes, in dem das Sensorsubstrat angeordnet ist, in der Kraftrichtung und diese Verschiebung bewirkt eine Verformung des Sensorsubstrates in derselben Richtung, da dieses in derselben Richtung innerhalb des Hohlraumes vorgespannt ist und die Abstützung der Vorspannung an solchen Oberflächen erfolgt. Es besteht ein zuverlässiger Formschluss zwischen dem Messkörper und der Vorspannvorrichtung bzw. dem Sensorsubstrat, der eine optimale Übertragung der zu messenden Kraft auf letzteres gewährleistet.

Vorzugsweise wird die Vorspannkraft auf das Substrat des Oberflächenwellensensors zumindest auf einer Seite durch mindestens einen neben dem Substrat zumindest teilweise in dem Hohlraum angeordneten Klemmkörper ausgeübt, wobei sich zumindest ein Klemmkörper an dem Messkörper an einer Oberfläche des Hohlraumes in Richtung der zu messenden Kraft abstützt. Das Sensorsubstrat braucht in diesem Fall nicht exakt auf die Abmessungen des Hohlraumes abgestimmt zu sein, sondern es kann kleiner sein, so dass es problemlos in den Hohlraum eingebracht werden kann. Die Beaufschlagung mit der Vorspannkraft erfolgt erst durch die Einbringung eines Klemmkörpers, der an die Abmessungen des Hohlraumes und des Sensorsubstrates entsprechend angepasst ist. Somit ist keine Passung zwischen dem Sensorsubstrat und den Abmessungen des Hohlraumes erforderlich.

Zur Erzeugung der Vorspannkraft eignet sich besonders die Verbindung zumindest eines Klemmkörpers mit dem Messkörper durch ein kraftschlüssiges Verbindungselement, wobei die Vorspannkraft durch den Kraftschluss zwischen dem Verbindungselement und dem Messkörper erzeugt wird. Die zur Herstellung der kraftschlüssigen Verbindung aufgewendete Kraft wird in diesem Fall in die Vorspannkraft umgesetzt. Auf diese Weise kann die Vorspannkraft für das Sensorsubstrat über die Verbindungskraft auf einen definierten Wert eingestellt werden.

Zweckmäßig ist es, wenn das kraftschlüssige Verbindungselement so angeordnet ist, dass es auf einen Klemmkörper eine Kraft in einer anderen Richtung als derjenigen der Vorspannkraft ausübt und der Klemmkörper eine schräg zur Richtung der Vorspannkraft verlaufende Oberfläche aufweist, durch welche ein Teil der von dem Verbindungselement auf den Klemmkörper ausgeübten Kraft in Richtung der Vorspannkraft umgelenkt wird. In diesem Fall kann der Klemmkörper insbesondere durch ein Verbindungselement an dem Messkörper befestigt werden, welches ihn an dem Messkörper senkrecht zu dessen Oberfläche andrückt, was der üblichsten Art einer kraftschlüssigen Verbindung zwischen zwei mechanischen Teilen entspricht.

Im einfachsten Fall kann das kraftschlüssige Verbindungselement eine Schraube sein und die schräge Oberfläche des Klemmkörpers kann entweder am Kopf der Schraube oder an einer mit der Schraube in Eingriff stehenden Mutter anliegen. In diesem Fall kann die Einstellung der Vorspannkraft in einfacher Weise durch das Anziehen der Schraube mit einem Drehmomentschlüssel bewerkstelligt werden.

Um zu vermeiden, dass sich die Vorspannung durch Bewegungen des Messkörpers, insbesondere durch Vibrationen ändert, empfiehlt es sich, das kraftschlüssige Verbindungselement in einer Position, in der es eine vorbestimmte Vorspannkraft erzeugt, unlösbar mit dem Messkörper zu verbinden. Bei Verwendung einer Schraube als Verbindungselement kann dies z. B. in einfacher Weise durch die Aufbringung eines Sicherungsklebers auf das Gewinde vor dem Anziehen der Schraubverbindung geschehen.

Alternativ zum Einbau in einen Hohlraum des Messkörpers kann die Vorspannvorrichtung einen Spannkörper aufweisen, in dem das Substrat des Oberflächenwellensensors zur Erzeugung der Vorspannung unabhängig von dem Messkörper eingespannt ist. In diesem Fall ist der Spannkörper zusammen mit dem darin eingespannten Substrat so an dem Messkörper befestigt, dass die zu messende Kraft zunächst von dem Messkörper auf den Spannkörper und von diesem zumindest teilweise auf Substrat übertragen wird. Durch das Entfallen des Hohlraumes ist diese Ausführungsform der Erfindung vielseitiger einsetzbar. Zudem werden hier die Struktur und die Festigkeit des Messkörpers kaum verändert.

Bevorzugt ist das Substrat des Oberflächenwellensensors in dem Spannkörper zwischen zwei einander gegenüberliegenden Oberflächen eingespannt, deren Abstand durch eine elastische Verformung des Spannkörpers veränderbar ist. Die Einbringung des Substrates des Oberflächenwellensensors in den Spannkörper gestaltet sich hierdurch besonders einfach.

Eine zweckmäßige Form des Spannkörpers ist ein Ring mit zwei einander gegenüberliegenden, nach innen gerichteten Vorsprüngen, an deren Enden sich die einander gegenüberliegenden Oberflächen zum Spannen des Substrates des Oberflächenwellensensors befinden, wobei der Abstand der Oberflächen der Vorsprünge durch Ausübung einer Druckkraft auf die Außenseite des Ringes senkrecht zur Richtung der Vorsprünge soweit vergrößerbar ist, dass das Substrat zwischen den Oberflächen platzierbar ist. Die Verformung des Spannkörpers kann in diesem Fall durch ein einfaches Werkzeug in Form einer Zange ausgeführt werden.

Zur Befestigung des Spannkörpers an dem Messkörper eignen sich insbesondere mindestens zwei kraftschlüssige Verbindungselemente, die sich von dem Spannkörper aus oder durch diesen hindurch in den Messkörper hinein erstrecken und so angeordnet sind, dass sie die zu messende Kraft von dem Messkörper auf den Spannkörper in der Richtung der Vorspannkraft formschlüssig übertragen. Die Einstellung einer definierten Vorspannung kann einerseits unmittelbar durch diese Befestigungsbauelemente (z.B. Exzenterschrauben), oder auch durch geeignete Maßnahmen innerhalb des Spannkörpers (z..B. mechanische Spannvorrichtung oder Spannungsänderung durch Materialabtrag) erfolgen. Nur die Befestigung des Spannkörpers an dem Messkörper ist kraftschlüssig, während die Übertragung der Messkraft formschlüssig erfolgt und daher sehr zuverlässig und langzeitstabil ist. Auch hier ist es zweckmäßig, wenn die Verbindungselemente zusätzlich unlösbar mit dem Messkörper und/oder mit dem Spannkörper verbunden sind.

Eine mögliche Anwendung, für welche sich die Erfindung besonders gut eignet, ist die Messung der Spannkraft einer Werkzeugspannvorrichtung in einer Arbeitsspindel einer Bearbeitungsmaschine. In diesem Fall handelt es sich bei dem Messkörper um eine Spannzange einer solchen Werkzeugspannvorrichtung.

Nachfolgend werden Ausführungsbeispiele der Erfindung unter Bezugnahme auf die Zeichnungen beschrieben. In diesen zeigt
- Fig. 1: eine schematische Darstellung eines Oberflächenwellensensors,
- Fig. 2: eine schematische Schnittansicht einer ersten Ausführungsform der Erfindung,
- Fig. 3: eine schematische Schnittansicht einer zweiten Ausführungsform der Erfindung und
- Fig. 4: eine schematische Darstellung einer dritten Ausführungsform der Erfindung.

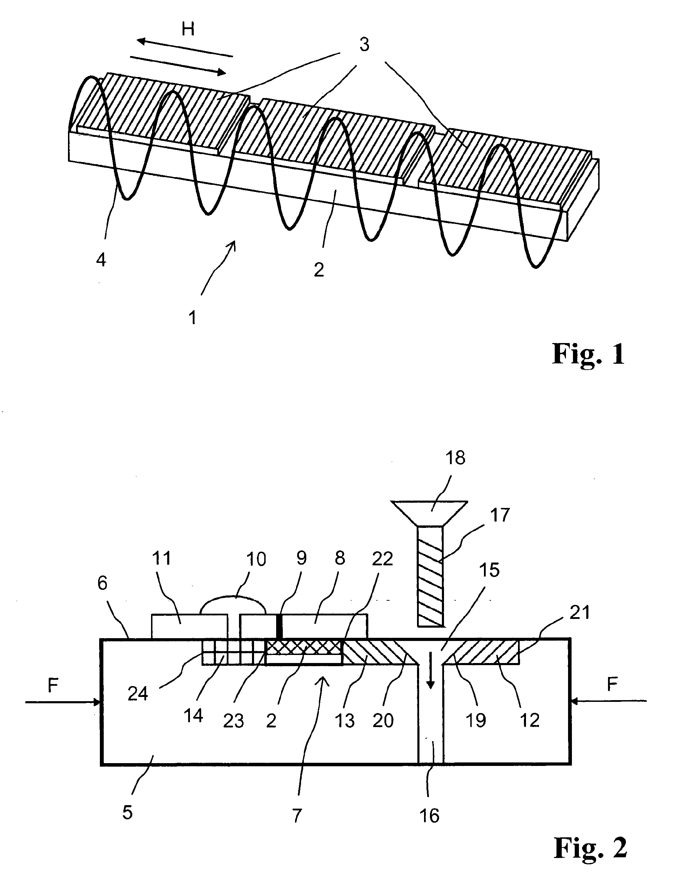

Wie Fig. 1 zeigt, besteht ein Oberflächenwellensensor 1 im wesentlichen aus einem piezoelektrischen Substrat 2 und aus akustoelektrischen Wandlern 3 in Form von Interdigitalelektroden, die an einer Oberfläche dieses Substrates 2 angeordnet sind. Durch eine Einkopplung eines elektrischen Signals in einen dieser Wandler 3 kann in dem Substrat eine in Fig. 1 durch eine Sinuskurve symbolisierte akustische Oberflächenwelle 4 angeregt werden, deren Hauptausbreitungsrichtung H in Fig. 1 durch zwei Pfeile gekennzeichnet ist. Die Pfeile deuten an, dass eine durch einen der Wandler 3 angeregte Oberflächenwelle an einem anderen der Wandler 3 reflektiert werden und in besagter Hauptausbreitungsrichtung H wieder zurücklaufen kann. Wesentlich ist, das es in dem Substrat 2 aufgrund der Anordnung der Wandler 3 und der Kristallorientierung des Substratmaterials eine Vorzugsrichtung H der Wellenausbreitung gibt.

Ein erstes Ausführungsbeispiel der Erfindung ist in Fig. 2 gezeigt. Ein Messkörper 5 wird in einer Richtung mit einer zu messenden Kraft F beaufschlagt. Diese ist in Fig. 1 als Druckkraft eingezeichnet, es könnte aber ebenso eine Zugkraft sein. In dem Messkörper 5 ist an einer Oberfläche 6 ein quaderförmiger Hohlraum 7 ausgebildet, in dem sich eine aus mehreren Elementen bestehende Vorspannvorrichtung und ein Oberflächenwellensensor der zuvor beschriebenen Art befindet. Das piezoelektrische Substrat 2 des Oberflächenwellensensors ist auf einer Leiterplatte 8 angeordnet ist. Eine auf dem Substrat 2 angeordnete erste Elektrodengruppe ist durch eine Durchkontaktierung 9 mit Leiterbahnen auf der dem Substrat 2 abgewandten Seite der Leiterplatte 8 verbunden. Über Bonddrähte 10 sind die Leiterbahnen der Leiterplatte 8 mit einer Antenne 11 verbunden.

Beim Betrieb des Oberflächenwellensensors werden von einem externen Sender periodisch Signale in die Antenne 11 eingestrahlt und über die Bonddrähte 10 und die Durchkontaktierungen 9 zu der ersten Elektrodengruppe auf dem Substrat 2 geleitet. Dort wird eine Oberflächenwelle angeregt, die von einer zweiten Elektrodengruppe auf dem Substrat 2 reflektiert und durch die erste Elektrodengruppe in ein elektrisches Reflexionssignal umgewandelt wird. Die Hauptausbreitungsrichtung H der Oberflächenwelle entspricht der Richtung der auf den Messkörper 5 einwirkenden Kraft F, die zu messen ist. Das Reflexionssignal läuft über die Durchkontaktierungen 9 und die Bonddrähte 10 zu der Antenne 11 zurück und wird von dieser zu einem externen Empfänger zurückgestrahlt. Anhand eines Vergleichs des eingestrahlten Signals und des empfangenen Reflexionssignals kann eine externe Auswertungseinrichtung eine Verformung des Substrates 2 ermitteln.

Um die interessierende Kraft F mittels des Oberflächenwellensensors messen zu können, muss die durch die Kraft F bewirkte Verformung des Messkörpers 5 in eine Verformung des Substrates 2 des Oberflächenwellensensors umgesetzt werden. Hierzu sind in dem Hohlraum 7 außer dem Substrat 2 noch drei Klemmkörper 12 bis 14 in Richtung der Kraft F neben dem Substrat 2 angeordnet. Diese Klemmkörper 12 bis 14 sind so dimensioniert, dass sie den Hohlraum 7 zusammen mit dem Substrat 2 in Richtung der Kraft F bis auf eine Lücke 15 zwischen den Klemmkörpern 12 und 13 vollständig ausfüllen. Unterhalb der Lücke 15 befindet sich in dem Messkörper 5 eine Gewindebohrung 16, in die eine Schraube 17 eingeschraubt werden kann, wie es in Fig. 1 durch einen Pfeil in der Lücke 15 angedeutet ist. Da das Substrat 2 eine geringere Dicke hat als die Klemmkörper 12 bis 14 und die Leiterplatte 8 das Substrat 2 seitlich überdeckt, wird das Substrat 2 in einem definierten Abstand vom Grund des Hohlraumes 7 gehalten, wenn die Leiterplatte 8 auf den an das Substrat 2 anschließenden Klemmkörpern 13 und 14 aufliegt.

Wenn die Schraube 17 in die Gewindebohrung 16 eingeschraubt und angezogen wird, drückt die schräge Oberfläche des Schraubenkopfes 18 gegen entsprechende schräge Oberflächen 19 und 20 der Klemmkörper 12 und 13, wodurch eine seitliche, d.h. in Richtung der zu messenden Kraft F gerichtete Vorspannkraft auf die Klemmkörper 12 und 13 ausgeübt wird. Der rechte Klemmkörper 12 überträgt diese Vorspannkraft unmittelbar auf eine senkrecht zur Oberfläche 6 des Messkörpers 5 und zur Richtung der zu messenden Kraft F verlaufende Oberfläche 21 des Hohlraumes 7. Der linke Klemmkörper 13 überträgt diese Vorspannkraft zunächst auf eine ebenfalls senkrecht zur Oberfläche 6 des Messkörpers 5 und zur Richtung der zu messenden Kraft F verlaufende Oberfläche 22 des Substrates 2. Dieses überträgt die Vorspannkraft über seine gegenüberliegende Oberfläche 23, die parallel zu der Oberfläche 22 liegt, auf den Klemmkörper 14. Schließlich überträgt der Klemmkörper 14 die Vorspannkraft auf eine Oberfläche 24 des Hohlraumes 7, die ebenfalls senkrecht zur Oberfläche 6 des Messkörpers 5 und zur Richtung der zu messenden Kraft F sowie parallel zu der gegenüberliegenden Oberfläche 21 des Hohlraumes 7 verläuft. Das Substrat 2 ist so angeordnet, dass die Richtung der Vorspannkraft mit der Hauptausbreitungsrichtung H von Oberflächenwellen in dem Substrat 2 übereinstimmt.

Im Ergebnis wird das Substrat 2 des Oberflächenwellensensors mit einer Druckkraft vorgespannt, deren Richtung mit derjenigen der zu messenden Kraft F übereinstimmt. Die Reaktionskräfte dieser Vorspannkraft werden über senkrecht zur Oberfläche 6 des Messkörpers 5 liegende Oberflächen des Hohlraumes 7 auf den Messkörper 5 übertragen. Der Wert der Vorspannkraft kann über das Anzugsmoment der Schraube 17 präzise eingestellt werden. Das Substrat 2 des Oberflächenwellensensors ist in dem an der Oberfläche 6 des Messkörpers 5 ausgebildeten Hohlraum 7 formschlüssig eingeklemmt. Eine Verformung des Messkörpers 5 durch die zu messende Kraft F wird unmittelbar richtungsgleich als reine Zug-oder Druckkraft auf die in dem Hohlraum angeordneten Elemente und somit auch auf das Substrat 2 des Oberflächenwellensensors übertragen und überlagert sich richtungsgleich der Vorspannkraft.

Würde man stattdessen das Substrat 2 auf die Oberfläche 6 des Messkörpers 5 aufkleben, so müssten sich die Elektroden notwendigerweise auf der offenen Oberseite des Substrates 2 befinden. Die Leiterplatte 8 würde dann nicht benötigt. In diesem Fall würde die durch die zu messende Kraft F an der Oberfläche 6 des Messkörpers 5 verursachte Druckspannung über die Kleberschicht als Schubspannung auf die Unterseite des Substrates 2 übertragen. Infolge der Eigensteifigkeit des Substrates 2 wäre die Druckspannung an der Oberseite des Substrates 2 gegenüber der Oberfläche 6 des Messkörpers 5 in diesem Fall deutlich vermindert. Ferner würde die Langzeitstabilität der Messgenauigkeit durch Kriechen des Klebers beeinträchtigt werden.

Diese Nachteile einer Kraftkopplung durch Klebung zwischen Messkörper 5 und Sensorsubstrat 2 werden durch die Erfindung vollständig eliminiert. Die senkrecht zur Ausbreitungsrichtung der Oberflächenwelle liegenden Oberflächen 22 und 23 des Sensorsubstrates 2 werden direkt sowohl mit der zu messenden Kraft F, als auch mit einer Vorspannkraft gleicher Richtung beaufschlagt, so dass das gesamte Sensorsubstrat 2 in der Kraftrichtung unter Druckspannung steht.

Da die Vorspannkraft erfindungsgemäß eine Druckkraft ist, wird der Messbereich lediglich durch die Bruchfestigkeit des Sensorsubstrates bestimmt, wenn die zu messende Kraft F ebenfalls eine Druckkraft ist, wie es in Fig. 2 angenommen ist. Wenn die zu messende Kraft F hingegen eine Zugkraft ist, so subtrahiert sie sich von der vorhandenen Vorspannkraft, wodurch der Messbereich auf den Wert der Vorspannkraft begrenzt ist, da in diesem Fall nach vollständiger Kompensation der Vorspannkraft durch die zu messende Kraft F kein Messeffekt mehr wirksam ist. Dies ist bei der Auslegung des Wertes der Vorspannkraft zu berücksichtigen, wenn eine Zugkraft gemessen werden soll.

Bei Einstellung der Vorspannkraft über eine Schraube 17 besteht grundsätzlich die Gefahr, dass sich die Vorspannkraft mit der Zeit verringert, indem sich die Schraube 17 lockert. Dies kann durch Erschütterungen oder Vibrationen bewirkt werden, denen der Messkörper 5 ausgesetzt sein kann, insbesondere wenn es sich bei ihm um einen Bestandteil einer Maschine handelt. Um diese Gefahr zu vermeiden, kann die Schraube 17 beispielsweise mit einem unlösbaren Schraubensicherungskleber dauerhaft in ihrer Anzugsposition fixiert werden. Die Fixierung könnte auch mit anderen Mitteln, beispielsweise durch eine Punktschweißung zwischen dem Schraubenkopf 18 und einem der Klemmkörper 12 oder 13 oder zwischen der Schraube 17 und dem Messkörper 5 am unteren Ende der Bohrung 16 erfolgen.

Zur Realisierung der Erfindung reichen auch weniger als drei Klemmkörper aus. So könnte auf den Klemmkörper 14 verzichtet werden. In diesem Fall wäre die Oberfläche 23 des Substrates 2 des Oberflächenwellensensors in direktem Kontakt mit der Oberfläche 24 des Hohlraumes 7, über welche die Vorspannkraft dann zwischen dem Messkörper 5 und dem Substrat 2 übertragen würde.

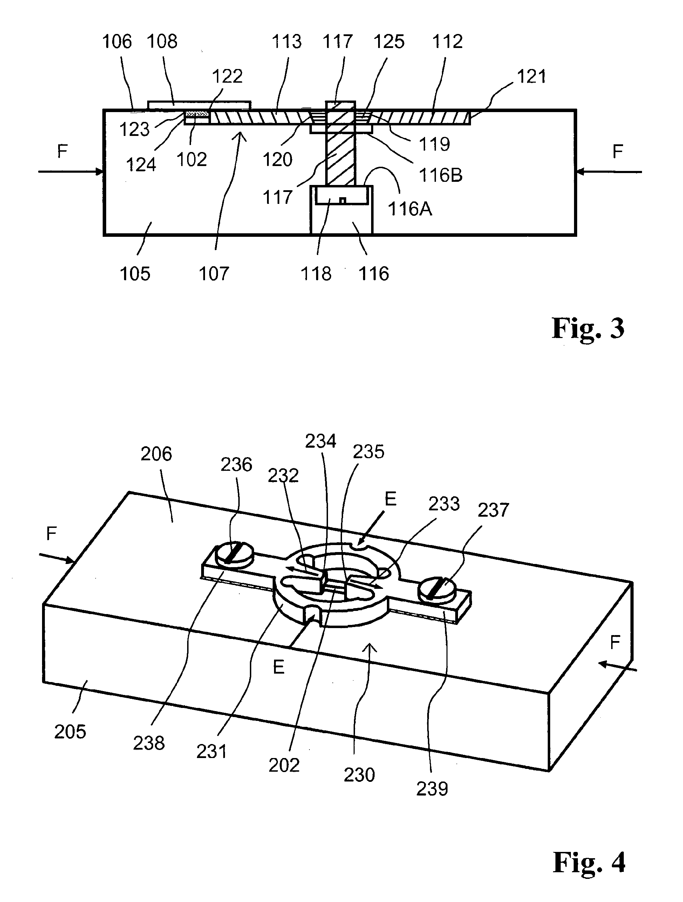

Ein zweites Ausführungsbeispiel der Erfindung zeigt Fig. 3. Der dortige Messkörper 105 weist an einer Oberfläche 106 ebenfalls einen quaderförmigen Hohlraum 107 auf. In diesem Hohlraum 107 befinden sich das Substrat 102 eines Oberflächenwellensensors sowie zwei Klemmkörper 112 und 113. Durch den Messkörper 105 hindurch führt eine Bohrung 116, die in diesem Fall kein Gewinde, sondern stattdessen zwei Absätze 116A und 116B enthält. In dem Hohlraum 107 befindet sich zwischen den Klemmkörpern 112 und 113 eine Mutter 125, mit der eine von der Rückseite her in die Bohrung 116 eingeführte Schraube 117 in Eingriff steht. Die Klemmkörper 112 und 113 sind so dimensioniert, dass sie den Hohlraum 107 zusammen mit der Mutter 125 und dem Substrat 102 in Richtung der Kraft F vollständig ausfüllen. Die Mutter 125 ist keine Standardmutter, sondern ihre Form ist speziell an die übrigen Elemente der Vorspannvorrichtung, mit denen Sie in Eingriff steht, angepasst. Für eine Mutter solcher Art ist auch die Bezeichnung Nutenstein gebräuchlich.

Der Schraubenkopf 118 liegt an dem unteren Absatz 116A der Bohrung 116 an. Die Mutter 125 weist schräge Seitenoberflächen auf, über die sie jeweils in Kontakt mit entsprechenden schrägen Oberflächen 119 und 120 der Klemmkörper 112 bzw. 113 steht. Der Durchmesser des oberen Abschnitts der Bohrung 116 bis zu dem oberen Absatz 116A ist im Verhältnis zu den Abmessungen der Mutter 125 so dimensioniert, dass letztere nicht in Kontakt mit dem Grund des Hohlraumes 107 gelangen kann, sondern die Reaktionskraft der beim Anziehen der Schraube 117 auf die Mutter 125 wirkenden Kraft ausschließlich über die schrägen Oberflächen 119 und 120 auf die Klemmkörper 112 und 113 übertragen wird

Beim Anziehen der Schraube 117 entwickelt sich durch die Schrägstellung der Oberflächen 119 und 120 eine seitliche, d.h. in Richtung der zu messenden Kraft F gerichtete Vorspannkraft auf die Klemmkörper 112 und 113. Der rechte Klemmkörper 112 überträgt diese Vorspannkraft unmittelbar auf eine senkrecht zur Oberfläche 106 des Messkörpers 105 und zur Richtung der zu messenden Kraft F verlaufende Oberfläche 121 des Hohlraumes 107. Der linke Klemmkörper 113 überträgt diese Vorspannkraft zunächst auf eine ebenfalls senkrecht zur Oberfläche 106 des Messkörpers 105 und zur Richtung der zu messenden Kraft F verlaufende Oberfläche 122 des Substrates 102. Dieses überträgt die Vorspannkraft über seine gegenüberliegende Oberfläche 123, die parallel zu der Oberfläche 122 liegt, auf eine Oberfläche 124 des Hohlraumes 107, die ebenfalls senkrecht zur Oberfläche 106 des Messkörpers 105 und zur Richtung der zu messenden Kraft F sowie parallel zu der gegenüberliegenden Oberfläche 121 des Hohlraumes 107 verläuft.

Im Ergebnis wird das Substrat 102 des Oberflächenwellensensors ebenso wie bei der ersten Ausführungsform auch hier mit einer Druckkraft vorgespannt, deren Richtung mit derjenigen der zu messenden Kraft F und mit der Hauptausbreitungsrichtung der Oberflächenwelle in dem Substrat 102 übereinstimmt. Für die Einstellbarkeit der Vorspannkraft, den Messbereich und die dauerhafte Fixierung der Schraube 117 gilt sinngemäß dasselbe wie für die erste Ausführungsform. Es versteht sich, dass auch hier die Anordnung eines dritten Klemmkörpers zwischen dem Substrat 102 des Oberflächenwellensensors und der Oberfläche 124 des Hohlraumes 107 möglich wäre. In Fig. 3 wurde auf eine Darstellung der Durchkontaktierung der Leiterplatte 108 sowie einer separaten Antenne zur Einstrahlung eines Anregungssignals und Rückstrahlung des Reflexionssignals verzichtet. Diese Elemente können aber ebenso wie bei der ersten Ausführungsform nach Fig. 2 vorhanden sein.

Ein drittes Ausführungsbeispiel der Erfindung zeigt Fig. 4. Der dortige Messkörper 205 weist an einer Oberfläche 206 eine Vorspannvorrichtung auf, die als von dem Messkörper 205 separate Funktionseinheit in Form eines einstückigen Spannkörpers 230 ausgebildet ist. Der Spannkörper 230 hat die Form eines Ringes 231 mit zwei einander gegenüberliegenden Vorsprüngen 232 und 233, die sich von dem Ring 231 aus nach innen erstrecken. Die Vorsprünge 232 und 233 enden an zwei einander gegenüberliegenden und zueinander parallelen Oberflächen 234 bzw. 235, zwischen denen das Substrat 202 eines Oberflächenwellensensors eingespannt ist.

Der Ring 231 ist an mehreren symmetrisch entlang seines Umfangs verteilten Stellen in seinem Querschnitt verjüngt und weist dadurch im Vergleich zu einem Ring mit konstanten Querschnitt eine geringere Biegesteifigkeit auf. Wenn auf den Ring 231 quer zu den Vorsprüngen 232 und 233 von außen eine Kraft E ausgeübt wird, dann verformt sich der Ring 231 zu einer Ellipse und der Abstand der beiden einander gegenüberliegenden Oberflächen 234 und 235 nimmt zu, was in Fig. 4 durch voneinander fort weisende Pfeile auf den Vorsprüngen 232 und 233 angedeutet ist. Bei einer ausreichenden Querkraft E erreicht der Ring 231 einen Verformungszustand, in dem das Substrat 202 eines Oberflächenwellensensors zwischen die beiden Oberflächen 234 und 235 eingeführt werden kann, das aufgrund seiner Länge in entspannten Zustand des Spannkörpers 230 nicht zwischen die beiden Oberflächen 234 und 235 passen würde. Dabei ist das Substrat 202 so auszurichten, dass die Hauptausbreitungsrichtung der Oberflächenwellen senkrecht zu den Oberflächen 234 und 235 der Vorsprünge 232 bzw. 233 liegt.

Bei einer Reduzierung der Querkraft E bewegen sich die beiden Vorsprünge 232 und 233 aufeinander zu und das Substrat 202 wird mit zunehmender Kraft zwischen den gegenüberliegenden Oberflächen 234 und 235 eingeklemmt. Die Länge des Substrates 202 und der Abstand der beiden Oberflächen 234 und 235 im entspannten Zustand des Spannkörpers 230 sind so aufeinander abgestimmt, dass nach einem vollständigen Wegfall der Querkraft E eine Vorspannkraft vorbestimmter Größe auf das Substrat 202 des Oberflächenwellensensors in der Hauptausbreitungsrichtung der Oberflächenwellen wirkt. Die Einspannung des Substrates 202 in dem Spannkörper 230 auf die vorausgehend beschriebene Weise wird abseits des Messkörpers 205, an dem eine Kraft gemessen werden soll, vorgenommen.

Zur mechanischen Kopplung des Spannkörpers 230 mit dem Messkörper 205 dienen zwei Schrauben 236 und 237, die sich durch zwei von dem Ring 231 nach außen weisende Fortsätze 238 und 239 hindurch senkrecht in den Messkörper 205 hinein erstrecken. Die Fortsätze 238 und 239 haben von dem Ring 231 aus gesehen die jeweils gleiche Richtung und die entgegengesetzte Orientierung wie die nach innen weisenden Vorsprünge 232 und 233, wobei dem Vorsprung 232 der Fortsatz 238 und dem Vorsprung 233 der Fortsatz 239 zugeordnet ist. Die jeweiligen Mittellinien der Vorsprünge 232 und 233 sowie der Fortsätze 238 und 239 stimmen in der Draufsicht miteinander und mit der gemeinsamen Richtung der Vorspannkraft und der zu messenden Kraft F überein. Ebenfalls mit dieser Richtung überein stimmt die Verbindungslinie der Mittelachsen der beiden Schrauben 238 und 239 in der Draufsicht.

Nach dem Anziehen der Schrauben 238 und 239 besteht eine feste mechanische Kopplung zwischen dem Spannkörper 230 und dem Messkörper 205, über welche die zu messende Kraft F zunächst unter Wahrung ihrer Richtung von dem Messkörper 205 formschlüssig auf den Spannkörper 230 übertragen wird. In dem Spannkörper 230 überlagert sich die auf ihn übertragene Kraft richtungsgleich der internen Vorspannkraft, was je nach dem Vorzeichen der Kraft F zu einer Erhöhung oder Verringerung der auf das Substrat 202 des Oberflächenwellensensors wirkenden Kraft führt. Auch auf diese Weise kann die mit der Erfindung beabsichtigte Wirkung erzielt werden. Es versteht sich, dass auch hier die Messkraft im Fall einer Zugkraft den Betrag der Vorspannkraft nicht überschreiten darf, da das Sensorsubstrat 202 sonst vollständig entlastet wird und kein Messsignal mehr liefern kann.

Um zu vermeiden, dass die Kraftübertragung durch die Schrauben 236 und 237 durch wiederholte Lastwechsel und/oder durch eine periodische Bewegung des Messkörpers 205 beeinträchtigt werden könnte, d.h. dass sich die mechanische Kopplung zwischen dem Messkörper 205 und dem Spannkörper 230 lockern könnte, können die Schrauben 236 und 237 zusätzlich unlösbar mit dem Messkörper und/oder mit dem Spannkörper 230 verbunden sein, beispielsweise durch einen Schraubensicherungskleber oder durch Punktschweißungen zwischen den Schraubenköpfen und den Fortsätzen 238 und 239.

Alternativ zur kraftschlüssigen Verbindung mit anschließender Fixierung sind auch andere Lösungen zur mechanischen Kopplung zwischen dem Messkörper 205 und dem Spannkörper 230 denkbar. In Frage kommen hierfür beispielsweise stoffschlüssige Verbindungsverfahren wie Schweißen, reaktives Bonden oder Löten, wobei die Eignung der verschiedenen Verfahren von den Materialien abhängt, aus denen der Messkörper 205 und der Spannkörper 230 bestehen. In typischen Anwendungen bestehen der Messkörper 205 und der Spannkörper 230 wie auch die Komponenten der Vorspannvorrichtung des ersten und zweiten Ausführungsbeispiels aus Metall.

Aus der vorausgehenden Beschreibung ergeben sich für einen Fachmann Variationsmöglichkeiten bei der Realisierung der Erfindung. So muss bei den beiden ersten Ausführungsformen der Hohlraum an der Oberfläche des Messkörpers nicht quaderförmig sein und die durch die zu messende Kraft verschobenen Oberflächen, an denen die Vorspannkraft abgestützt wird, brauchen nicht unbedingt eben zu sein, sondern sie könnten auch gekrümmt sein. Die Anzahl der Klemmkörper kann variiert werden und die Befestigung eines Klemmkörpers in dem Hohlraum unter Erzeugung einer Vorspannung könnte auch ohne zusätzliches Verbindungselement erfolgen, beispielsweise mittels einer Übermaßpassung, wobei der Klemmkörper zur Einbringung in den Hohlraum thermisch geschrumpft werden könnte.

Alternativ zum Reflexionsprinzip kann ein Oberflächenwellensensor auch ohne Reflektor als Verzögerungsleitung mit zwei interdigitalen Elektrodenanordnungen ausgelegt werden, von denen eine zur Wandlung eines eingespeisten elektromagnetischen Signals in eine akustische Oberflächenwelle und die andere zur Rückwandlung der Oberflächenwelle in ein elektromagnetisches Signal dient. Die Erfindung ist auch unter Verwendung dieser Art von Oberflächenwellensensor realisierbar.

Bei der dritten Ausführungsform kann der Spannkörper auch eine andere als die hier gezeigte Kreisform, beispielsweise eine eckige Form, haben. Die nach außen ragenden Fortsätze sind nicht unbedingt notwendig, sondern die Verbindungsschrauben könnten auch direkt auf dem Ring angebracht sein. Solche und vergleichbare Modifikationen liegen im Ermessen des Fachmannes und sollen vom Schutz der Patentansprüche umfasst sein.

## Patentansprüche

1. Vorrichtung zur Kraftmessung an einem Messkörper (5; 105) mittels eines Oberflächenwellensensors (1) mit einem piezoelektrischen Substrat (2; 102; 202) und an dessen Oberfläche angeordneten akustoelektrischen Wandlern (3), wobei der Oberflächenwellensensor (1) eine vorbestimmte Hauptausbreitungsrichtung (H) von Oberflächenwellen in dem Substrat (2; 102; 202) aufweist, **dadurch gekennzeichnet, dass** das Substrat (2; 102; 202) des Oberflächenwellensensors (1) durch eine Vorspannvorrichtung eingeklemmt und dadurch mit einer einachsigen Vorspannkraft in der Hauptausbreitungsrichtung (H) der Oberflächenwellen beaufschlagt ist, und dass die Vorspannvorrichtung an oder in dem Messkörper (5; 105; 205) in einer solchen Ausrichtung befestigt ist, dass die zu messende Kraft über die Vorspannvorrichtung richtungsgleich mit der Vorspannkraft auf das Substrat (2; 102; 202) übertragen wird.

2. Vorrichtung nach Anspruch 1, **dadurch gekennzeichnet, dass** das Substrat (2; 102) des Oberflächenwellensensors und die Vorspannvorrichtung zumindest teilweise in einem an der Oberfläche (6; 106) des Messkörpers (5; 105) ausgebildeten Hohlraum (7; 107) angeordnet sind, und dass eine der Vorspannkraft entsprechende Reaktionskraft durch mindestens eine Oberfläche (21, 24; 121, 124) des Hohlraumes (7; 107), welche durch die zu messende Kraft eine Verschiebung in deren Richtung erfährt, von der Vorspannvorrichtung auf den Messkörper (5; 105) übertragen wird.

3. Vorrichtung nach Anspruch 2, **dadurch gekennzeichnet, dass** die Vorspannvorrichtung mindestens einen neben dem Substrat (2; 102) zumindest teilweise in dem Hohlraum (7; 107) angeordneten Klemmkörper (12, 13, 14; 112, 113) aufweist, welcher die Vorspannkraft zumindest auf eine Seite des Substrates (2; 2) des Oberflächenwellensensors ausübt, wobei sich zumindest ein Klemmkörper (12, 14; 112) an dem Messkörper (5; 105) an einer Oberfläche (21, 24; 121) des Hohlraumes (7; 107) in Richtung der zu messenden Kraft abstützt.

4. Vorrichtung nach Anspruch 3, **dadurch gekennzeichnet, dass** zumindest ein Klemmkörper (12, 13; 112, 113) durch ein kraftschlüssiges Verbindungselement (17; 117, 125) mit dem Messkörper (5; 105) verbunden ist und die Vorspannkraft durch den Kraftschluss zwischen dem Verbindungselement (17; 117, 125) und dem Messkörper (5; 105) erzeugt wird.

5. Vorrichtung nach Anspruch 4, **dadurch gekennzeichnet, dass** das kraftschlüssige Verbindungselement (17; 117, 125) so angeordnet ist, dass es auf einen Klemmkörper (12, 13; 112, 113) eine Kraft in einer anderen Richtung als derjenigen der Vorspannkraft ausübt, und dass der Klemmkörper (12, 13; 112, 113) mindestens eine schräg zur Richtung der Vorspannkraft verlaufende Oberfläche (19, 20; 119, 120) aufweist, durch welche ein Teil der von dem Verbindungselement (17; 117, 125) auf den Klemmkörper (12, 13; 112, 113) ausgeübten Kraft in Richtung der Vorspannkraft umgelenkt wird.

6. Vorrichtung nach Anspruch 5, **dadurch gekennzeichnet, dass** das kraftschlüssige Verbindungselement (17) eine Schraube ist, deren Kopf (18) an der schrägen Oberfläche (19, 20) des Klemmkörpers (12, 13) anliegt.

7. Vorrichtung nach Anspruch 5, **dadurch gekennzeichnet, dass** das kraftschlüssige Verbindungselement (117, 125) eine Schraube (117) und eine mit dieser in Eingriff stehende Mutter (125) umfasst, und dass die Mutter (125) an der schrägen Oberfläche (119, 120) des Klemmkörpers (112, 113) anliegt.

8. Vorrichtung nach einem der Ansprüche 4 bis 7, **dadurch gekennzeichnet, dass** das kraftschlüssige Verbindungselement (17; 117, 125) in einer Position, in der es eine vorbestimmte Vorspannkraft erzeugt, unlösbar mit dem Messkörper (5; 105) verbunden ist.

9. Vorrichtung nach Anspruch 1, **dadurch gekennzeichnet, dass** die Vorspannvorrichtung einen Spannkörper (230) aufweist, in dem das Substrat (202) des Oberflächenwellensensors zur Erzeugung der Vorspannung unabhängig von dem Messkörper (205) eingespannt ist, und dass der Spannkörper (230) zusammen mit dem darin eingespannten Substrat (202) so an dem Messkörper (205) befestigt ist, dass die zu messende Kraft zunächst von dem Messkörper (205) auf den Spannkörper (230) und von diesem zumindest teilweise auf das Substrat (202) übertragen wird.

10. Vorrichtung nach Anspruch 9, **dadurch gekennzeichnet, dass** das Substrat (202) des Oberflächenwellensensors in dem Spannkörper (230) zwischen zwei einander gegenüberliegenden Oberflächen (234, 235) eingespannt ist, deren Abstand durch eine elastische Verformung des Spannkörpers (230) veränderbar ist.

11. Vorrichtung nach Anspruch 10, **dadurch gekennzeichnet, dass** der Spannkörper (230) die Form eines Ringes (231) mit zwei einander gegenüberliegenden, nach innen gerichteten Vorsprüngen (232, 233) hat, an deren Enden sich die einander gegenüberliegenden Oberflächen (234, 235) zum Spannen des Substrates (202) des Oberflächenwellensensors befinden, und dass der Abstand der Oberflächen (234, 235) der Vorsprünge (232, 233) durch Ausübung einer Druckkraft auf die Außenseite des Ringes (231) senkrecht zur Richtung der Vorsprünge (232, 233) soweit vergrößerbar ist, dass das Substrat (202) zwischen den Oberflächen (234, 235) platzierbar ist.

12. Vorrichtung nach einem der Ansprüche 9 bis 11, **dadurch gekennzeichnet, dass** sich zur Befestigung an dem Messkörper (205) mindestens zwei kraftschlüssige Verbindungselemente (236, 237) von dem Spannkörper (230) aus oder durch diesen hindurch in den Messkörper (205) hinein erstrecken und so angeordnet sind, dass sie die zu messende Kraft von dem Messkörper (205) auf den Spannkörper (230) in der Richtung der Vorspannkraft formschlüssig übertragen.

13. Vorrichtung nach Anspruch 12, **dadurch gekennzeichnet, dass** die Verbindungselemente (236, 237) zusätzlich zu der kraftschlüssigen Verbindung unlösbar mit dem Messkörper (205) und/oder mit dem Spannkörper (230) verbunden sind.

14. Vorrichtung nach einem der Ansprüche 1 bis 13, **dadurch gekennzeichnet, dass** der Messkörper (5; 105; 205) eine Spannzange einer Werkzeugspannvorrichtung für eine Arbeitsspindel einer Bearbeitungsmaschine ist.

15. Vorrichtung nach einem der Ansprüche 1 bis 14, **dadurch gekennzeichnet, dass** die Vorspannvorrichtung eine durch eine mechanische Belastung verursachte Verformung des Messkörpers in eine Dehnung oder Stauchung des Substrates (2; 102; 202) des Oberflächenwellensensors (1) überträgt.

## Claims

1. Device for measuring the force acting on a measuring body (5; 105) by means of a surface wave sensor (1) with a piezoelectric substrate (2; 102; 202) and acoustoelectric transducers (3) arranged on the surface thereof, wherein the surface wave sensor (1) exhibits a predetermined main direction of propagation (H) of the surface waves in the substrate (2; 102; 202), **characterised in that** the substrate (2; 102; 202) of the surface wave sensor (1) is compressed by a preloading device and thereby subjected to a uniaxial preloading force in the main direction of propagation (H) of the surface waves, and **in that** the preloading device is fastened on or in the measuring body (5; 105; 205) in such an alignment that the force to be measured is transmitted through the preloading device in the same direction with the preloading force to the substrate (2; 102; 202).

2. Device according to claim 1, **characterised in that** the substrate (2; 102) of the surface wave sensor and the preloading device are at least partly arranged in a cavity (7; 107) formed at the surface (6; 106) of the measuring body (5; 105), and **in that** a reaction force corresponding to the preloading force is transmitted by at least one surface (21, 24; 121, 124) of the cavity (7; 107) which is displaced by the force to be measured in the direction thereof, from the preloading device to the measuring body (5; 105).

3. Device according to claim 2, **characterised in that** the preloading device exhibits at least one compressing body (12, 13, 14; 112, 113) which is arranged next to the substrate (2; 102) at least partly in the cavity (7; 107) and exerts the preloading force at least on one side of the substrate (2; 102) of the surface wave sensor, wherein at least one compressing body (12, 14; 112) bears on the measuring body (5; 105) on a surface (21, 24; 121) of the cavity (7; 107) in the direction of the force to be measured.

4. Device according to claim 3, **characterised in that** at least one compressing body (12, 13; 112, 113) is connected to the measuring body (5; 105) by a force-locking connecting element (17; 117, 125) and the preloading force is generated by the force-locking connection between the connecting element (17; 117, 125) and the measuring body (5; 105).

5. Device according to claim 4, **characterised in that** the force-locking connecting element (17; 117, 125) is arranged so that it exerts a force on a compressing body (12, 13; 112, 113) in a different direction to that of the preloading force, and **in that** the compressing body (12, 13; 112, 113) exhibits at least one surface (19, 20; 119, 120) running at an oblique angle to the direction of the preloading force through which a part of the force exerted by the connecting element (17; 117, 125) on the compressing body (12, 13; 112, 113) is deflected in the direction of the preloading force.

6. Device according to claim 5, **characterised in that** the force-locking connecting element (17) is a screw the head (18) of which bears on the oblique surface (19, 20) of the compressing body (12, 13).

7. Device according to claim 5, **characterised in that** the force-locking connecting element (117, 125) comprises a screw (117) and a nut (125) in engagement with the latter, and **in that** the nut (125) bears on the oblique surface (119, 120) of the compressing body (112, 113).

8. Device according to one of claims 4 to 7, **characterised in that** the force-locking connecting element (17; 117, 125) is connected inseparably with the measuring body (5; 105) in a position in which it generates a predetermined preloading force.

9. Device according to claim 1, **characterised in that** the preloading device exhibits a clamping body (230) in which the substrate (202) of the surface wave sensor is clamped to generate the preloading independently of the measuring body (205), and **in that** the clamping body (230) together with the substrate (202) clamped therein is fastened to the measuring body (205) so that the force to be measured is initially transmitted from the measuring body (205) to the clamping body (230) and from the latter at least partly to the substrate (202).

10. Device according to claim 9, **characterised in that** the substrate (202) of the surface wave sensor is clamped in the clamping body (230) between two facing surfaces (234, 235) the spacing of which can be changed by elastic deformation of the clamping body (230).

11. Device according to claim 10, **characterised in that** the clamping body (230) takes the form of a ring (231) with two mutually opposed inwardly directed projections (232, 233) at the ends of which are located the mutually facing surfaces (234, 235) for clamping the substrate (202) of the surface wave sensor, and **in that** the spacing of the surfaces (234, 235) of the projections (232, 233) can be increased by exerting a pressure force on the outside of the ring (231) perpendicularly to the direction of the projections (232, 233) until the substrate (202) can be positioned between the surfaces (234, 235).

12. Device according to one of claims 9 to 11, **characterised in that** for fastening to the measuring body (205) at least two force-locking connecting elements (236, 237) extend from the clamping body (230) or through the latter into the measuring body (205) and are arranged so that they transmit the force to be measured from the measuring body (205) to the clamping body (230) in the direction of the preloading force in a form-locking manner.

13. Device according to claim 12, **characterised in that** in addition to the force-locking connection, the connecting elements (236, 237) are connected inseparably with the measuring body (205) and/or with the clamping body (230).

14. Device according to one of claims 1 to 13, **characterised in that** the measuring body (5; 105; 205) is a collet of a tool clamping fixture for a work spindle of a machine tool.

15. Device according to one of claims 1 to 14, **characterised in that** the preloading device converts a deformation of the measuring body caused by a mechanical loading into an expansion or compression of the substrate (2; 102; 202) of the surface wave sensor (1).

## Revendications

1. Dispositif de mesure de forces sur un corps de mesure (5 ; 105) à l'aide d'un capteur d'ondes acoustiques de surface (1) avec un substrat piézoélectrique (2 ; 102 ; 202) et un transducteur électro-acoustique (3) disposé à sa surface, sachant que le capteur d'ondes acoustiques de surface (1) présente un sens de propagation principal (H) prédéfini d'ondes superficielles sur le substrat (2 ; 102 ; 202), **caractérisé en ce que** le substrat (2 ; 102 ; 202) du capteur d'ondes acoustiques de surface (1) est bloqué par un dispositif de précontrainte et, de ce fait, est soumis à une force de précontrainte uniaxiale dans le sens de propagation principale (H) des ondes superficielles et **en ce que** le dispositif de précontrainte au niveau du ou dans le corps de mesure (5 ; 105 ; 205) est fixé dans une orientation telle que la force à mesurer par l'intermédiaire du dispositif de précontrainte est transmise dans le même sens que celui de la force de précontrainte sur le substrat (2 ; 102 ; 202).

2. Dispositif selon la revendication 1, **caractérisé en ce que** le substrat (2 ; 102) du capteur d'ondes acoustiques de surface et le dispositif de précontrainte sont disposés au moins partiellement sur un espace creux (7, 107) formé à la surface (6, 106) du corps de mesure (5, 105) et **en ce qu'**une force de réaction correspondant à la force de précontrainte est transmise depuis le dispositif de précontrainte au corps de mesure (5, 105) à l'aide d'au moins une surface (21, 24 ; 121, 124) de l'espace creux (7, 107), qui subit, du fait de la force à mesurer, un déplacement dans leur direction.

3. Dispositif selon la revendication 2, **caractérisé en ce que** le dispositif de précontrainte présente, outre le substrat (2 ; 102), au moins un corps de serrage (12, 13, 14 ; 112, 113) disposé au moins partiellement dans l'espace creux (7, 107), qui exerce la force de précontrainte au moins sur une face du substrat (2 ; 2) du capteur d'ondes acoustiques de surface, sachant qu'au moins un corps de serrage (12, 14 ; 112) sur le corps de mesure (5 ; 105) s'appuie sur une surface (21, 24 ; 121) de l'espace creux (7 ; 107) dans le sens de la force à mesurer.

4. Dispositif selon la revendication 3, **caractérisé en ce qu'**au moins un corps de serrage (12, 13 ; 112, 113) est relié au corps de mesure (5 ; 105) à l'aide d'un élément de connexion à action mécanique (17 ; 117, 125) et **en ce que** la force de précontrainte est produite par une action de friction entre l'élément de connexion (17 ; 117, 125) et le corps de mesure (5 ; 105).

5. Dispositif selon la revendication 4, **caractérisé en ce que** l'élément de connexion à action mécanique (17 ; 117, 125) est disposé de telle sorte qu'il exerce sur un corps de serrage (12, 13 ; 112, 113) une force dans un autre sens que celui de la force de précontrainte, et que le corps de serrage (12, 13 ; 112, 113) présente au moins une surface (19, 20 ; 119, 120) se développant en biais par rapport au sens de la force de précontrainte, grâce à laquelle une partie de la force exercée sur le corps de serrage (12, 13 ; 112, 113) par l'élément de connexion à action mécanique (17 ; 117, 125) est déviée dans le sens de la force de précontrainte.

6. Dispositif selon la revendication 5, **caractérisé en ce que** l'élément de connexion à action mécanique (17) est une vis dont la tête (18) s'appuie sur la surface oblique (19, 20) du corps de serrage (12, 13).

7. Dispositif selon la revendication 5, **caractérisé en ce que** l'élément de connexion à action mécanique (117, 125) est une vis, et comprend un écrou (125) en interaction mécanique avec celle-ci et **en ce que** l'écrou (125) s'appuie sur la surface oblique (119, 120) du corps de serrage (112, 113).

8. Dispositif selon l'une quelconque des revendications 4 à 7, **caractérisé en ce que** l'élément de connexion à action mécanique (17 ; 117, 125) est relié au corps de mesure (5 ; 105) d'une manière indétachable, dans une position dans laquelle il exerce une force de précontrainte prédéterminée.

9. Dispositif selon la revendication 1, **caractérisé en ce que** le dispositif de précontrainte présente un corps de blocage (230), dans lequel le substrat (202) du capteur d'ondes acoustiques de surface est bloqué en vue de la production de la précontrainte indépendamment du corps de mesure (205), et **en ce que** le corps de blocage (230), conjointement au substrat (202) qui y est coincé, est fixé au corps de mesure (205) de telle sorte que la force à mesurer est d'abord transmise du corps de mesure (205) CCC au corps de blocage (230) et, de celui-ci, au moins partiellement au substrat (202).

10. Dispositif selon la revendication 9, **caractérisé en ce que** le substrat (202) du capteur d'ondes acoustiques de surface est bloqué dans le corps de blocage (230) entre deux surfaces (234, 235) opposées l'une à l'autre, dont l'écart peut être modifié grâce à une déformation élastique du corps de blocage (230).

11. Dispositif selon la revendication 10, **caractérisé en ce que** le corps de blocage (230) possède la forme d'un anneau (231) avec deux parties en saillie (232, 233) dirigées vers l'intérieur, opposées l'une à l'autre, aux extrémités desquelles se trouvent les surfaces (234, 235) opposées l'une à l'autre, destinées au blocage du substrat (202) du capteur d'ondes acoustiques de surface, et **en ce que** l'écart des surfaces (234, 235) des parties en saillie (232, 233) peut être agrandi par l'exercice d'une force de pression sur la face externe de l'anneau (231), perpendiculairement à la direction des parties en saillie (232, 233) de telle sorte que le substrat (202) soit à même d'être placé entre les surfaces (234, 235).

12. Dispositif selon l'une quelconque des revendications 9 à 11, **caractérisé en ce que**, en vue de la fixation au corps de mesure (205), au moins deux éléments de connexion à action mécanique (236, 237) se prolongent par le corps de blocage (230) ou à travers le corps de mesure (205) et sont disposés de telle sorte que la force à mesurer soit transmise par engagement positif du corps de mesure (205) au corps de blocage (230) dans le sens de la force de précontrainte.

13. Dispositif selon la revendication 12, **caractérisé en ce que** les éléments de connexion (236, 237) sont reliés, en plus de la connexion par action mécanique, de manière indétachable au corps de mesure (205) et/ou au corps de blocage (230).

14. Dispositif selon l'une quelconque des revendications 1 à 13, **caractérisé en ce que** le corps de mesure (5 ; 105 ; 205) est un dispositif de serrage d'outil pour un arbre moteur d'une machine d'usinage.

15. Dispositif selon l'une quelconque des revendications 1 à 14, **caractérisé en ce que** le dispositif de précontrainte transmet une déformation causée par une sollicitation mécanique du corps de mesure sous la forme d'un allongement ou d'une déformation sous pression du substrat (2 ; 102 ; 202) du capteur d'ondes acoustiques de surface (1).
